# EUROPÄISCHE PATENTSCHRIFT

(11) **EP 1 901 614 B1**
(45) Veröffentlichungstag und Bekanntmachung des Hinweises auf die Patenterteilung: **13.05.2009**
(21) Anmeldenummer: 05787243.4
(22) Anmeldetag: 09.08.2005
(51) Int. Cl.: A23L 1/00

(54) **VERFAHREN ZUR INSTANTISIERUNG VON PULVERN, INSBESONDERE KOKOSNUSSMILCHPULVER**
METHOD FOR THE INSTANTIZATION OF POWDERS, PARTICULARLY OF COCONUT MILK POWDER
PROCÉDÉ DE PRÉPARATION DE POUDRES INSTANTANÉES, EN PARTICULIER DE POUDRE DE LAIT DE NOIX DE COCO

(30) Priorität: 11.08.2004 WO PCT/DE2004/038910
(43) Veröffentlichungstag der Anmeldung: 26.03.2008
(73) Patentinhaber: Cargill Texturizing Solutions Deutschland GmbH & Co KG, 20539 Hamburg (DE)
(72) Erfinder: STEIGER, Daniel, 22869 Schenefeld (DE); STOFFELS, Ilona, 20535 Hamburg (DE); KNICKREHM, Ilka, 25479 Ellerau (DE)
(74) Vertreter: Eisenführ, Speiser & Partner
(86) Internationale Anmeldenummer: PCT/EP2005/008631
(87) Internationale Veröffentlichungsnummer: WO 2008/009297

(56) Entgegenhaltungen:
- GB-A- 2 035 035

## Beschreibung

Die Erfindung bezieht sich auf ein Verfahren zur Instantisierung von Pulvern, deren Teilchen freies Oberflächenfett (FOF) aufweisen.

Die Erfindung bezieht sich auf Verfahren zur Instantisierung von Pulvern für den Einsatz bei der Lebensmittel- und Tiemahrungsmittelherstellung, deren Teilchen freies Oberflächenfett aufweisen, insbesondere von Kokosnussmilchpulver.
Aus der GB 2 035 035 A ist ein Verfahren zur Herstellung eines instantisierten Milchpulvers mit einem Fettantell von über 10% bekannt. Hierbei wird bei der Herstellung des instantisierten Milchpulvers instantisierbares Milchpulver mit einem Fettanteil von über 10% so angefeuchiet, dass sich Agglomerate bilden, welche mit einer wässrigen Emulsion von lecithin oder einer Lecithin-Fraktion behandelt werden.

Es ist bekannt, bei der Instantisierung einen Emulgator, z. B. Lecithin einzusetzen. Unter lecithin wird eine komplexe Mischung einer Vielzahl von Bestandteilen verstanden, vor allem Phospholipide, Glykolipide, Kohlenhydrate und in einigen Fällen Triglyceride, wobei die Phospholipide als polare Phosphor enthaltende Lipide die aktiven Bestandteile der Lecithine darstellen, und zwar sowohl in technologischer als auch in physiologischer Hinsicht Diese komplexen Mischungen sind als Lebensmitteladditive sowohl in Europa als auch in den Vereinigten Staaten zugelassen und können daher als Emulgator für Lebensmittel eingesetzt werden.

Die Unterschiede, in den Lecithinen, auf die es im Zusammenhang mit der vorliegenden Erfindung ankommt, sind auf die anteilsmäßige Zusammensetzung der Phospholipide zurückzuführen. Es sind dies die Anteile an Phosphatidylcholin, Phosphatidylethanolamin. Phosphatidsäure, Phosphatidylinositol und auch an deren entsprechende Lysoverbindungen.

Alginate sind Salze und Ester der Alginsäure und können aus Algen (marine brown algae) isoliert werden. Es ist jedoch auch möglich, aus Bakterien, wie Azotobakter vinelandil und Azotobakter crococum und verschiedenen anderen Pseudomonas, Alginate herzustellen.

Sie werden in Lebensmitteln wegen ihrer besonderen Eigenschaften bei der Gelbildung, als Verdickungsmittel, als Stabilisator und auch wegen der Möglicher mit Ihnen die Viskosität von Flüssigkeiten einzustellen, eingesetzt. Die als Verdickungsmittel eingesetzten Alginate sind Natrium-, Ammonium- und Kallumsalze der Alginsäure.

Der Einsatz von Alginaten bei der Instantisierung ist nicht beschrieben worden, was darauf zurückgeführt werden kann, dass durch den Zusatz von Alginaten zu Fluiden diese verdickt werden und schon bei Zusätzen in geringer Menge sehr hohe Viskositäten annehmen, was der Instantisierung entgegenwirkt.

Bel der vorliegende Erfindung geht es um ein Verfahren, um den Instantisierungsprozess zu verbessern, und zwar insbesondere im Hinblick auf eine gute Benetzbarkeit mit Wasser, bzw. wässrigen Flüssigkeiten, d. h. eine Benetzbarkeit in kürzester Zelt.

### Erreicht wird dies durch ein

Verfahren zur Instantisierung von Pulvern für den Einsatz bei der Lebensmittel- und Tiemahrungsmittelherstellung, deren Teilchen freies Oberflächenfett aufweisen, insbesondere von Kokosnussmilchpulver, bei welchem Lecithin und Alginat in Wasser oder einer wässrigen Flüssigkeit auf die Pulverteilchen gesprüht und anschließend getrocknet werden, sowie ein

Verfahren zur Instantisierung von Pulvern für den Einsatz bei der Lebensmittel- und Tiernahrungsmittelherstellung, deren Teilchen freies Oberflächenfett aufweisen, insbesondere von Kakosnussmilchpulver, bei welchem Lecithin und Alginat in Wasser oder einer wässrigen Flüssigkeit auf die Pulverteilchen gesprüht, die Pulverteilchen agglomerieren und anschließend getrocknet werden.

Beschrieben wird nachfolgend auch ein nicht erfindungsgemäßes.

Verfahren zur Instantisierung von Pulvern für den Einsatz bei der Lebensmittel- und Tiemahrungsmittelherstellung, deren Teilchen freies Oberflächenfett aufwelsen, insbesondere von Kokosnussmilchpulver, bei welchem Alginat in Wasser oder einer wässrigen Flüssigkeit auf die Pulverteilchen gesprüht wird, die Pulvertelichen ggfs. agglomerieren und getrocknet werden und bei welchem Lecithin in Wasser oder einer wässrigen Flüssigkeit dispergiert und auf die Pulverteilchen gesprüht wird und diese anschließend getrocknet werden. Oder bel welchem Lecithin in flüssiger Form oder verdünnt in Öl/ Fett oder gelöst in Öl / Fett und auf die Pulvertelichen gesprüht wird.

Für die Agglomeration wird das ausgewählte Alginat in Wasser gelöst und auf die Pulverteilchen aufgesprüht, die dann agglomerieren und danach getrocknet werden.

Der Grund für den Einsatz von Alginaten ist hier die Behandlung der Oberfläche der Pulverteilchen, nämlich bei der Bildung einer Schicht (coating) auf der freien Oberflächenfettschicht dieser Teilchen.

Aus der Gruppe der Alginate werden bevorzugt für die vorliegende Erfindung die Natriumsalze der Alginsäure bevorzugt und ganz besonders werden diejenigen Alginate verwendet, die einen höheren Anteil an Mannutonsäure im Vergleich zu Guluronsäure aufweisen. Weiterhin werden solche Alginate bevorzugt, die eine geringe Molekülgröße haben, so dass bei einer 4-Gew.-%-Lösung in Wasser diese eine Viskosität von weniger als 500 mPas hat.

Für den Agglomerationsvorgang wurde beispielsweise ein Alginat XPV MC25 erfolgreich eingesetzt, das in einer 4 Gew.-%-Lösung eine Viskosität von 20 mPas hat.

In der einen Stufe eines nicht erfindungsgemäßen Instantislerungsverfahrens wird für die Lecithinierungstufe das Lecithin in Fett oder Öl (vorzugsweise Kokosnussfett oder Sojaöl) gelöst und diese Mischung wird auf die fluidisierten Kokosnussmilchtelichen aufgesprüht.

Aus der großen Gruppe der Lecithine werden für die Erfindung bevorzugt herausgegriffen solche Lecithine und Lecithinprodukte mit einem acetonunlöslichen Anteil zwischen 30 Gew.-% bis 99,9 Gew.-% und zwar ganz besonders bevorzugt mit einem Anteil größer als 97 Gew.-%.

Für die Erfindung wird beispielsweise ein Lecithin mit der folgenden Zusammensetzung eingesetzt, wobei der Anteil von Phosphatidylcholin (PC) summiert mit dem Anteil von Lysophosphatidylcholin (LPC), berechnet auf den acetonunlöslichen Anteil, wie folgt zusammengesetzt ist:
12-95% (PC+LPC) vorzugsweise 16 - 64% (PC+LPC) und ganz besonders bevorzugt 20 - 33 % (PC+LPC), jeweils berechnet auf den acetonunlöslichen Anteil und in Gewichtsprozent angegeben.

Im Zusammenhang mit der Lecithinierungsstufe können im Handel erhältliche Lecithine eingesetzt werden, so z. B. Metarin P, Metarin CP, Emultop, Emultop HL50, Emulfluid HL33, und zwar jeweils gelöst in Kokosnussfett sowie Metarin P gelöst in Sojaöl. Die Dosierung liegt im Bereich von 0,4 bis 1,0% des acetonunlöslichen Anteils am Pulver.

Die bei Versuchen gemäß der Erfindung erzielten Vorteile sind die bessere Benetzbarkeit, ein besseres Verhalten hinsichtlich des Absinkens in der Flüssigkeit und schließlich das verbesserte klumpenfreie Dispergierverhalten.

Bei Vergleichsversuchen mit nur einer Verfahrensstufe, also entweder der Lecithinierung oder der Agglomeration bzw. des Coatens mit Alginat ergab sich, dass jedes Verfahren für sich nur bedingt positiven Einfluss auf das Instantverhalten genommen hat. Durch das Verschmelzen der beiden Verfahren zu einer einzigen Verfahrensstufe gemäß der Erfindung traten überraschenderweise positive Einflüsse auf die Benetzbarkeit, die Fließeigenschaften und die Dispergierbarkeit auf.

Pulver mit Fettanteil, die mit Lecithin besprüht werden, um ein verbessertes Instantverhalten zu erhalten, verlieren ihre guten Benetzungseigenschaften über die Lagerzeit. Dieser Effekt ist dadurch bedingt, dass die Phospholipide (PL) des Lecithins - speziell die eher unpolaren PL (z.B. Phosphatidyletanolamin - PE) - unter die Oberfläche ("Pulveroberfläche" bzw. Grenzfläche zwischen Luft und Fett) des freien Oberflächenfetts (FOF) der Pulver migrieren, diese PL nicht mehr auf der Oberfläche zur Verfügung stehen bzw. die nur noch sehr wenigen eher polaren PL (z.B. Phosphatidylcholin - PC) auf der Oberfläche nicht mehr ausreichen und sich daher das Benetzungsverhalten λ bzw. Instantverhalten über die Zeit signifikant verschlechtert. Dies gilt insbesondere bei ansteigenden Anteilen an FOF, welche üblicherweise bei zunehmenden Fettanteilen im Pulverprodukt ansteigt, und oder verlängerten Lagerzeiten.

Hinreichend bekannt ist die Verwendung von PL Fraktionen mit erhöhten Anteilen an polaren PL. Diese bleiben eher an der Oberfläche (Grenzfläche Luft/Fett) solcher Pulver erhalten und dadurch kann eine Verschlechterung des Instanverhaltens / Benetzbarkeit über die Lagerzeit erheblich verzögert werden.

Bei dem Versuch ein Kokosnussmilch- oder Sahnepulver oder ähnliches zu Instantisieren kommt erschwerend hinzu, dass es sich um ein Pulver mit einem sehr hohen Gesamtfettanteil und somit einem hohen Anteil an FOF handelt.

Eine leichte Verbesserung konnte durch eine geeignete Lecithinqualität erreicht werden. Allerdings hat sich schon nach wenigen Tagen das ursprüngliche Benetzungsverhalten wieder eingestellt.

Daher wurde eine möglichst vollständige Kompensation der negativen Eigenschaften der Fettoberfläche von Kokosnussmilchpulvern durch ein Coating mit z.B. Hydrokolloiden angestrebt. Die Schwierigkeit hierbei war die Auswahl eines geeigneten Polysaccharides. Eine sehr gute Sprühbarkeit musste gewährleistet sein (niedrige Viskosität), eine möglichst geschlossene Oberfläche sollte erreicht werden und es sollten keine zu großen Mengen sein (würde zu einer erheblichen Verschiebung der Pulverzusammensetzung führen).

Gleichzeitig war es wichtig, dass die rheologischen Eigenschaften nach einer Rekonstitution des Pulvers in z.B. Wasser der zu erwartenden Viskosität einer z.B. Kokosnussmilch entspricht. Die Textur / Viskosität durfte durch den Einsatz eines Polysaccharid nicht negativ beeinflusst werden.

Die Viskosität einer Hydrokolloid-Wassersuspension wird üblicherweise durch eine entsprechende Zugabemenge an Hydrokolloid eingestellt. Um mit Hydrokolloiden, wie z. B. Alginaten, eine niedrige Viskosität der Sprühsuspension zu erhalten, müsste die Zugabemenge entsprechend gering sein, so dass ein vollständiges Coaten der Pulveroberfläche verhältnismäßig lange dauern würde (geringe Sprührate und lange Nachtrocknungszeiten). Gleichzeitig sind durch die Molekülgröße bedingt erheblich größere Mengen aufzubringen, um ein geschlossenes Coating zu erhalten. Auch würde das rekonstituierte Endprodukt eine untypische Textur aufweisen.

Alle Bedingungen zur Eignung eines Hydrokolloides resultierten in der Verwendung eines neu entwickelten Alginates, das auch bei höherer Zugabemenge in Wasser keinen erheblichen Viskositätsanstieg mit sich bringt. Durch seine geringe Molekülgröße (wenig sterische Behinderung) kann ein sehr eng gepacktes und dünnes Coating auf die Pulveroberfläche aufgebracht werden und somit eine erheblich geringere Menge eingesetzt werden. Doch auch bei der Verwendung dieses speziellen Alginats konnte nur eine geringfügige Verbesserung des Instantverhaltens erreicht werden. Der Aufwand stand in einem schlechten Verhältnis zum Ergebnis.

Das Produkt wurde nun noch einer Lecithinierung unterworfen.

Es zeigten sich leicht verbesserte Eigenschaften. Aber auch hier konnte das Ergebnis den großen Aufwand nicht aufwiegen.

Nun wurde noch eine weitere Variante ausprobiert. Hierbei wurde ein Alginat-LecithinCoating in einem einzigen Schritt erzeugt. Ganz überraschend, und nicht wie zu vermuten, konnten nun hervorragende Ergebnisse erzielt werden. Diese Ergebnisse lassen vermuten, dass durch die Verwendung beider Zutaten in einem Schritt ein Komplex auf der FOF - Oberfläche entsteht, der dem Pulver die Eigenschaft eines hervorragenden Instantproduktes verleiht und diesen Effekt auch über eine längere Lagerzeit aufrechterhält.

Das wesentliche Merkmal der Erfindung ist die gleichzeitige Verwendung von Lecithin und Alginat, die zu Ergebnissen führt, die weder durch den Einsatz von Lecithin für sich noch von Alginat für sich vorhersehbar waren.

### Beispiel 1 (Vergleichsbeispiel)

### Stoffe

- Kokosnussmilchpulver (Pulau Sambu) Fettgehalt 50%
- Alginat XPV MC 25 (Degussa Food Ingredients)

### Methode

200g Kokosnussmilchpulver wird in einen "bottom spray" Behälter eines chargenweise arbeitenden Fließbetts (z.B. Aeromatic STREA-1) vorgelegt. Der Zuluftstrom beträgt 30m³/h bei 40°C. 20g einer 5%igen Sprühsuspension aus XPV MC 25 in Wasser wird mittels Zweistoffdüse (∅ 0,5mm, Druckluft 1,5bar) auf das Pulver aufgesprüht. Anschließend wird bei einem Zuluftstrom von 30m³/h und bei einer Temperatur von 40°C für 15min das Wasser wieder herausgetrocknet. Das Pulver wird dadurch mit einem Alginatcoating überzogen.

Zur Beurteilung der Benetzbarkeit werden 20g des behandelten Pulvers auf die Oberfläche von 200ml Wasser mit einer Temperatur von 25°C gegeben (Becherglas 400ml). Gleichzeitig wird die Zeit bis zur vollständigen Benetzung des Pulvers mit Wasser gestoppt. Nach 20 sec. wird ein Foto des Überprüfungsansatzes aufgenommen.

Für die Beurteilung des Dispergierverhaltens wird wie oben beschrieben verfahren, allerdings wird direkt nach dem Kontakt des Pulvers mit dem Wasser das Pulver unter gleich bleibenden Bedingungen untergerührt (Magnetrührer, 20sec.). Danach wird die Dispersion nach der zu beobachtenden Verteilung des Pulvers beschrieben.

### Ergebnis

Das Pulver ist innerhalb von 50 sec. vollständig mit Wasser benetzt.

Nach 20 sec. zeigt sich noch ca. 40% unbenetztes Pulver an der Wasseroberfläche.

Das Pulver lässt sich homogen und klumpenfrei in das Wasser dispergieren.

### Beispiel 2 (Vergleichsbeispiel)

Wie Beispiel 1, jedoch mit veränderter Zusammensetzung der Sprühsuspension.

### Stoffe

- Kokosnussmilchpulver (Pulau Sambu) Fettgehalt 50%
- Metarin P (Degussa Food Ingredients)

Es werden 20g einer 5%igen Sprühdispersion aus Metarin P in Wasser aufgesprüht. Das Pulver wird dadurch mit einem Lecithincoating überzogen.

### Ergebnis

Das Pulver ist innerhalb von 30 sec. vollständig mit Wasser benetzt.

Nach 20 sec. zeigt sich noch ca. 10% unbenetztes Pulver an der Wasseroberfläche.

Das Pulver lässt sich homogen und klumpenfrei in das Wasser dispergieren.

### Beispiel 3

Wie Beispiel 1, jedoch mit veränderter Zusammensetzung der Sprühsuspension.

### Stoffe

- Kokosnussmilchpulver (Pulau Sambu) Fettgehalt 50%
- Metarin P (Degussa Food Ingredients)
- Alginat XPV MC 25 (Degussa Food Ingredients)

Es werden 20g einer 10%igen Sprühdispersion von einer Mischung zu je gleichen Teilen XPV MC 25 und Metarin P in Wasser aufgesprüht. Das Pulver wird dadurch mit einem Alginat-Lecithincoating überzogen.

### Ergebnis

Das Pulver ist innerhalb von 10 sec. vollständig mit Wasser benetzt.

Nach 20 sec. ist kein unbenetztes Pulver an der Wasseroberfläche zu sehen.

Das Pulver lässt sich homogen und klumpenfrei in das Wasser dispergieren.

### Bemerkung

Um festzustellen, inwieweit der Anteil an Wasser in der Sprühsuspension (Beispiele 1-3) Einfluss auf das Instantverhalten des Pulvers nimmt (eine Befeuchtung der Pulveroberfläche durch z.B. Wasser kann zu einer Agglomeration führen - Agglomerate zeigen typischer weise ein verbessertes Instantverhalten) wurde wie in Beispiel 1 beschrieben, ein Pulver hergestellt, auf das nur Wasser aufgesprüht worden ist. Das resultierende Pulver zeigt kein Benetzungsverhalten. Das heißt, dass das gesamte Pulver trocken auf der Wasseroberfläche verbleibt.

### Beispiel 4

### Stoffe

- Sprühsahnepulver (Subicream 72) Fettgehalt 72%
- Alginat XPV MC 25 (Degussa Food Ingredients)
- Metarin CP (Degussa Food Ingredients)

### Methode

500g Pulver wird in einen "top spray" Behälter eines chargenweise arbeitenden Fließbetts (z.B. Heinen Mobatch) vorgelegt. Der Zuluftstrom beträgt 35m³/h bei 55°C. 50g einer 10%igen Sprüdispersion von einer Mischung zu je gleichen Teilen XPV MC 25 und Metarin CP in Wasser wird mittels Zweistoffdüse (∅ 0,8mm, Druckluft 1,5bar) auf das Pulver aufgesprüht. Die Sprührate beträgt 8ml/min. Anschließend wird bei einem Zuluftstrom von 30m³/h und bei einer Temperatur von 60°C für 15min das Wasser wieder herausgetrocknet. Das Pulver wird dadurch mit einem Alginat-Lecithincoating überzogen.

Zur Beurteilung der Benetzbarkeit werden 20g des behandelten Pulvers auf die Oberfläche von 200ml Wasser mit einer Temperatur von 25°C gegeben (Becherglas 400ml). Gleichzeitig wird die Zeit bis zur vollständigen Benetzung des Pulvers mit Wasser gestoppt.

Für die Beurteilung des Dispergierverhaltens wird wie oben beschrieben verfahren, allerdings wird direkt nach dem Kontakt des Pulvers mit dem Wasser das Pulver unter gleich bleibenden Bedingungen untergerührt (Magnetrührer, 20sec.). Danach wird die Dispersion nach der zu beobachtenden Verteilung des Pulvers beschrieben.

### Ergebnis

Das Pulver ist innerhalb von 45 sec. vollständig mit Wasser benetzt.

Das Pulver lässt sich homogen und klumpenfrei in das Wasser dispergieren.

### Bemerkungen

Das Verwenden von chargenweise arbeitenden Geräten, wie in diesen Beispielen beschrieben, schließt die Verwendung von kontinuierlichen Prozessen nicht aus.

Um zu bestätigen, dass der Einsatz eines vergleichbar niedrigviskosen Alginats (XPV MC 25) erforderlich ist, wurden Versuche mit einem anderen Alginat, Satialgine S 20, durchgeführt. Satialgine S 20 ist ein handelsübliches Alginat aus dem Produktprogramm der Degussa Food Ingredients, welches die niedrigste Viskosität in Wasser aufweist.

Jedoch schon die Herstellung einer 10%igen wässrigen Sprüdispersion von einer Mischung zu je gleichen Teilen Satialgine S 20 und Metarin P erwies sich als schwierig. Durch die arttypisch hohe Viskosität konnte nur mit Mühe eine homogene, klumpenfreie Dispersion hergestellt werden.

Auch die Dosierung der Sprühdispersion (das Pumpen zur Düse) erwies sich als schwierig.

Darüber hinaus bildet sich bei der Benetzung des Pulvers in Wasser eine hochviskose Schicht auf der Wasseroberfläche, die nur schwer homogen in das Wasser einzurühren ist.

Metarin ist ein Warenzeichen der Anmelderin und steht für entöltes Lecithin (Metarin P) und PC angereichertes entöltes Lecithin (Metarin CP).

## Patentansprüche

1. Verfahren zur Instantisierung von Pulvern für den Einsatz bei der Lebensmittel- und Tlemahrungsmittelherstellung, deren Teilchen freies Oberflächenfett aufweisen, insbesondere von Kokosnussmilchpulver, bei welchem Lecithin und Alginat In Wasser oder einer wässrigen Flüssigkeit auf die Pulverteilchen gesprüht und anschließend getrocknet werden.

2. Verfahren zur Instantisierung von Pulvern für den Einsatz bei der Lebensmittel- und Tiernahrungsmitteiherstellung, deren Teilchen freles Oberflächenfett aufwelsen, insbesondere von Kokosnussmilchpulver, bei weichem Lecithin und Alginat in Wasser oder einer wässrigen Flüssigkeit auf die Pulverteilchen gesprüht, die Pulverteilchen agglomerieren und anschließend getrocknet werden.

## Claims

1. Process for the instantization of powders whose particles contain free surface fat for use in food and animal feed production, especially of coconut milk powder, wherein lecithin and alginate in water or an aqueous liquid are sprayed on to the powder particles, which are then dried.

2. Process for the instantization of powders whose particles contain free surface fat for use in food and animal feed production, especially of coconut milk powder, wherein lecithin and alginate in water or an aqueous liquid are sprayed on to the powder particles, which agglomerate and are then dried.

## Revendications

1. Procédé de préparation de poudres instantanées destinées à être utilisées dans la fabrication de produits alimentaires et de produits pour l'alimentation animale dont les particules présentent de la matière grasse de surface libre, notamment de poudre de lait de noix de coco, dans lequel on pulvérise, sur les particules de poudre, de la lécithine et de l'alginate dans de l'eau ou dans un autre liquide aqueux qui sont ensuite séchés.

2. Procédé de préparation de poudres instantanées destinées à être utilisées dans la fabrication de produits alimentaires et de produits pour l'alimentation animale dont les particules présentent de la matière grasse de surface libre, notamment de poudre de lait de noix de coco, dans lequel on pulvérise, sur les particules de poudre, de la lécithine et de l'alginate dans de l'eau ou dans un autre liquide aqueux qui agglomèrent les particules de poudre et qui sont ensuite séchés.
